Europäisches Patentamt

(19) European Patent Office

Office européen des brevets

(11) EP 0 852 447 A2

(12) EUROPEAN PATENT APPLICATION

(43) Date of publication:
08.07.1998 Bulletin 1998/28

(51) Int. Cl.$^6$: H04N 9/28

(21) Application number: 97122176.7

(22) Date of filing: 16.12.1997

(84) Designated Contracting States:
AT BE CH DE DK ES FI FR GB GR IE IT LI LU MC NL PT SE
Designated Extension States:
AL LT LV MK RO SI

(30) Priority: 04.01.1997 DE 19700204

(71) Applicant:
DEUTSCHE THOMSON-BRANDT GMBH
78048 Villingen-Schwenningen (DE)

(72) Inventors:
• Chauvin, Jacques
  78087 Mönchweiler (DE)
• Runtze, Albert
  78052 Villingen-Schwenningen (DE)
• Malota, Bernhard
  78087 Mönchweiler (DE)

(74) Representative:
Wördemann, Hermes, Dipl.-Ing.
Deutsche Thomson-Brandt GmbH,
Licensing & Intellectual Property,
Göttinger Chaussee 76
30453 Hannover (DE)

(54) Method for adjusting the convergence in a projection television receiver

(57) The projection picture screen is provided with a sensor in the form of a photodiode in order to set the convergence. The picture projected onto the screen contains a marker in the form of a monochrome, bright, that is to say red, green or blue picture point, which marker is adjusted for the correct convergence onto the sensor. Owing to various influences such as drift, background light, sensitivity and de-focusing, exact adjustment of the marker onto the middle of a sensor is not achieved.

The object is to eliminate the influence of such interference, and to ensure that the marker is adjusted onto the middle of the sensor.

Two markers (M1, M2) are moved towards the sensor (S) from opposite directions, and a mean value (D5) between the two adjustment variables (D3, D4), obtained therefrom, is used as manipulated variable (D5) for the marker (M).

Particularly for a projection television receiver with automatic adjustment of the convergence.

Fig.3

Fig.4

EP 0 852 447 A2

## Description

The invention proceeds from a method for adjusting the convergence in a projection television receiver in accordance with the preamble of Claim 1.

In a projection television receiver, it is necessary to adjust the convergence during production or automatically in each case when switching on. This means that the three pictures projected onto the picture screen for the primary colours R,G,B must be brought to coincide for each point of the picture.

It is known to image on the screen a grating pattern of horizontal and vertical lines which forms a multiplicity of intersection points. Correction values are determined for the convergence for each intersection point. As a rule, these are six values, specifically values for the three primary colours R,G,B, in the horizontal and vertical directions in each case. These correction values are stored for each intersection point in a digital memory. During reproduction, the correction values are extracted for each intersection point from the memory, converted into analogue correction values in digital/analogue converters, and used to correct the convergence at the intersection point. The correction of the convergence between the intersection points in the horizontal and vertical directions is performed as a rule by low-pass filtering or by interpolation.

It is also known to fit sensors in the form of photodiodes on the screen inside or outside the visible picture. A so-called marker in the form of a monochrome, that is to say red, green or blue picture point is inserted into the picture projected onto the screen. For optimal convergence, in each case for the primary colours R,G,B and in the horizontal and vertical directions, this marker on the picture screen must in each case impinge on the assigned sensor.

The adjustment of the marker to the sensor by influencing the deflection in the picture tubes is subject in practice to a multiplicity of errors such as, in particular, drift, background brightness, sensitivity, changes in threshold value, de-focusing and lens errors. One difficulty and inaccuracy consists in the following:

When the marker is located outside the sensor, and the sensor therefore does not output a signal generated by this marker, the circuit at first has no information as to whether the marker is located on the left or right of the sensor in the case of the horizontal convergence, or below or above the sensor in the case of the vertical convergence, nor as to the direction in which it must move to find the sensor. There is then a need for a search, which can, with a certain probability, lead in the wrong direction. In a multiplicity of cases, the marker therefore has to continue the search in the opposite direction if it does not find the sensor in the first adjusting direction. This means a loss of time, which can be perceived as disturbing during switching on, in particular in the case of automatic convergence adjustment.

It is the object of the invention to provide a method for adjusting the convergence in a projection television receiver, in which the said errors are corrected. In one embodiment of the invention, it is achieved, furthermore, that at the start of the convergence correction the marker automatically carries out a movement in the correct direction relative to the sensor and a search operation in the wrong direction is avoided.

This object is achieved by the invention specified in Claim 1. Advantageous developments of the invention are specified in the subclaims.

The essence of the invention is thus that two markers are moved towards the sensor from opposite directions with a varying step size until the sensor supplies an output voltage indicating light for the two markers in conjunction with two mutually spaced manipulated variables, and in that a mean value of the two manipulated variables is used as manipulated variable for the marker.

Thus, in the case of the invention the marker approaches the sensor by using markers which approach the sensor from opposite directions. The finite dimensions of the marker and the sensor thus provide two mutually spaced manipulated variables because, for example, in the case of the horizontal convergence the marker impinging on the sensor from the left and the marker impinging on the sensor from the right necessarily impinge on the marker in conjunction with different manipulated variables in the horizontal direction. The optimum manipulated variable can thus be determined by averaging between these two manipulated variables, and can be used for the convergence.

In one embodiment of the invention, the area of the marker is large by comparison with the area of the sensor. The marker preferably has a rectangular or square area comprising a multiplicity of successive lines with the whole line duration or a part thereof. The dimension of the marker in the direction of the adjustment relative to the sensor is larger in this case than the adjustment range of the marker, both for the horizontal convergence and for the vertical convergence. The dimension, the adjustment range and the position of the marker relative to the sensor are matched to one another such that in its end setting in the adjusting direction towards the sensor, the marker does not leave the sensor, and in its end setting in the adjusting direction away from the sensor it leaves the sensor. The area of the marker is preferably equal to the area which is enclosed by grid lines of a grid pattern which is represented on the picture screen and defines convergence intersection points.

By virtue of this embodiment of the invention, it is possible, as will be explained in more detail in the description, to achieve that in each case a marker can already detect at the instant of the start of the convergence correction, without a movement and purely on the basis of its output signal, whether it is on the left of the sensor and thus must be moved to the right, or whether it is located on the right of the sensor and therefore must be moved to the left to find the sensor, in order to strike the sensor. As a result, time is saved in adjusting the convergence, for example in each case when switching on the set, and convenience for the customer is enhanced.

Another embodiment of the invention operates using the following steps:

a) the manipulated variable is changed in large steps such that the marker is moved from the first side towards the sensor until, in conjunction with a first value of the manipulated variable, the sensor supplies a signal triggered by the marker,
b) the manipulated variable is moved back by one step to the second value, situated therebefore,
c) the manipulated variable is changed again in the direction towards the sensor in smaller steps, until the sensor again supplies a signal in conjunction with a third value of the manipulated variable,
d) the steps a) - c) are carried out likewise by moving the marker from the other side towards the sensor, a fourth value thereby being produced, and
e) the mean value between the third value and the fourth value is used as manipulated variable for the convergence.

The step width of the large steps is in this case approximately 5-10 times the step width of the smaller steps. The marker can be formed by a monochrome, bright line in a background which is dark in the adjustment range. The large steps preferably have a step width such that the marker cannot jump over the entire sensor with one step. This embodiment of the invention permits the particularly accurate alignment of the marker onto the sensor, the influence of the inaccuracy parameters mentioned at the beginning on the convergence correction being eliminated to the greatest extent.

The invention is explained below with reference to an exemplary embodiment and with the aid of the drawing, in which:

Figure 1        shows the principle of a design of a projection television receiver,
Figure 2        shows the basic mode of operation of the convergence correction with one marker and one sensor,
Figures 3, 4        show the basic mode of operation of the first embodiment,
Figures 5, 6        show the movement of the left-hand marker relative to the sensor for the horizontal convergence,
Figures 7, 8        show, correspondingly, the movement of the right-hand marker relative to the sensor,
Figures 9 - 12        show the corresponding marker movement for the vertical convergence,
Figures 13, 14        show the mode of operation of the said second embodiment of the invention, and
Figures 15, 16        show diagrams for explaining the advantages achieved by the invention.

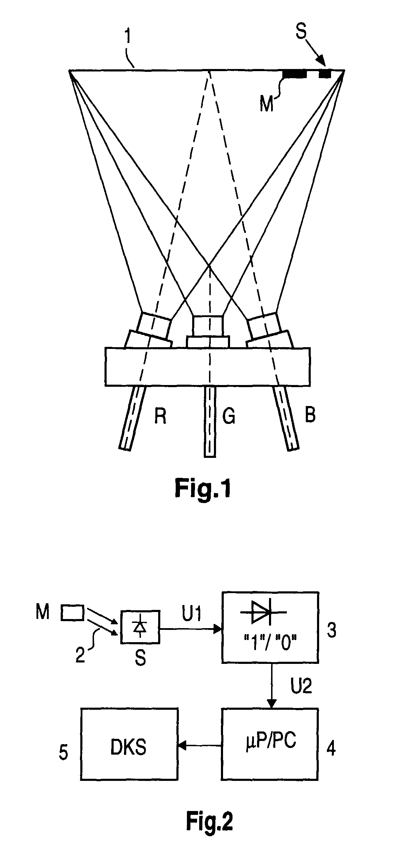

Figure 1 shows a projection television receiver with three monochromatic picture tubes for the primary colours R, G, B. Each of the picture tubes projects a picture with the corresponding colour onto the picture screen 1, the projected pictures being brought to coincide and producing a colour picture. Inside or outside the picture area, the picture screen 1 is assigned a stationary sensor S in the form of a photodiode. The projected picture contains one marker M each for the three primary colours R, G, B in the form of a monochrome bright, that is to say pure red, green or blue picture point. The marker M must impinge on the sensor S for optimal convergence. This is detected by virtue of the fact that the sensor S outputs an output signal only upon impingement of a marker M. The output signal has its maximum value when the marker M fully illuminates the sensor S, or the marker S is located on the sensor S with its entire area or extent.

Figure 2 shows a simplified block diagram for such a convergence correction. The marker M transmits a light beam 2, which strikes the sensor S in the middle in the case of an optimal convergence setting. When the marker M impinges, the sensor S supplies an output voltage U1 which passes onto the detector 3. The detector 3 detects whether light 2 passes from the marker M onto the sensor S, and thus essentially supplies a binary voltage with "1" = "light" and "0" = "no light". The digital signal U2 thus obtained passes on to the microprocessor or personal computer 4, which supplies a signal to the digital convergence circuit (DKS)5. The circuit 5 contains digital memories, inter alia. Stored in the memory are convergence correction values which influence the convergence correction such that the marker M impinges on the sensor S for the three primary colours R, G, B in the horizontal direction and vertical direction.

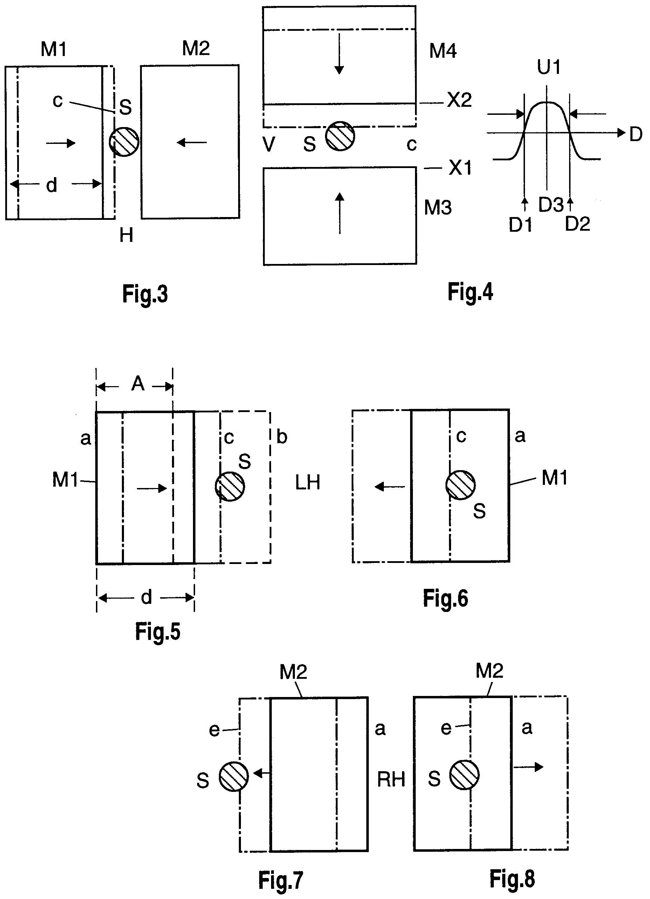

Figure 3 shows the basic mode of operation of the said embodiment, in which the sensor S is assigned two markers M1 and M2 which are moved towards the sensor S from opposite directions, that is to say from the left and from the right. The dimension d of the markers M1 and M2 in the direction of displacement is large in this case by comparison with the dimension of the sensor S and is 20 mm, for example, in practice. The marker M1 is moved towards the sensor S until its edge just touches the sensor S or begins to cut it, and thus the sensor S outputs an output signal to the evaluation circuit. This is represented by the dashed and dotted edge c of the marker M1. In this position, a first manipulated variable thus results for the convergence correction. Likewise, the marker M2 assigned to the right-hand side of the sensor S is moved towards the sensor S until its left-hand edge just impinges on the sensor S. A second manipulated variable is obtained as a result and deviates from the first manipulated variable. The mean value of the two manipulated variables is then used as correcting quantity. Represented correspondingly in Figure 4 are two markers M3 and M4 below and above the sensor S for adjusting the convergence in the vertical direction V. The operation for determining the correcting quantity for the vertical convergence is performed in accordance with Figure 3.

The stepwise approach and accurate alignment of the marker M onto the sensor S is performed in the following way: it may be assumed that the marker M can be adjusted over the range X1/X2 for the direction of the convergence in the vertical direction for the red picture R. The upper line of the marker for red is adjusted to the middle position of the adjustment range by feeding the corresponding correction data to the correction channel for red. The algorithm then moves the marker M into the position in which the upper line of the marker M just touches or begins to touch the sensor S. For this purpose, the sensor is evaluated as to whether it receives light or receives no light. If "no light" is detected, the correction data are increased by the differential value delta = $(X1+X2)/4$ . If "light" is detected, the data are reduced by the differential value delta = $(X1+X2)/4$ . The differential value delta is then changed to the value delta/2. This operation is continued until the integral part of delta < 0. The correcting manipulated variable is obtained in this way. The same operation is carried out to determine the upper boundary. In this case, the first step is to adjust the lowermost line of the red marker to the middle position of the adjustment range, that is to say to $(X1+X2)/2$ . If "no light" is detected, the manipulated variable is reduced by delta. The manipulated variable D2 is finally obtained thereby. The correct position of the sensor S is then calculated as $(D1 + D2)/2$ . The same operation is carried out correspondingly for the horizontal convergence and for green and blue.

Figure 5 shows in detail the adjustment of the left-hand marker M1 of Figure 3 for the horizontal direction H. The marker M1 is firstly located on the left of the sensor S outside the sensor S, as indicated in the position a. The dimension d of the marker M1 in the direction of adjustment is in this case greater than the adjustment range A of the marker M1. This means that the marker M1 cannot leave the sensor S to the right, as indicated by the dashed position b. This gives rise to the following advantage: if at the start of the correction the output signal U1 of the sensor S has the value "0", that is to say "no light" is detected, the marker M1 can be located only to the left of the sensor S, because it cannot leave the sensor S in the right-hand end position, and the signal "1" would therefore be generated. If at the start of the correction the sensor S outputs the output signal "1", the sensor M1 must be located on the right of or too far to the right from the sensor S, because on the left of the sensor S it would not strike the sensor S. Thus, it is already possible to detect from the static output signal of the sensor S at the start of the convergence correction without a search whether the marker M1 is located to the left of the sensor S, therefore must be moved to the right to find the sensor, or whether it is located on the right of the sensor S and must thus be moved to the left. The adjustment is performed in each case such that the right-hand limiting edge of the marker M1 just touches or starts to cut the sensor S on the left-hand side, as is represented by the dashed and dotted edge c.

Figure 6 shows the left-hand marker M1 in the right-hand end position relative to the sensor S. As already explained, the marker M1 cannot leave the sensor S, with the result that the sensor S supplies the output signal U1 = "1" = "light". From this signal, the correction circuit detects that the marker M must move to the left for the correction adjustment onto the sensor S, specifically until the edge c again just begins to cut the sensor S on the left-hand side.

Figures 7 and 8 show the same relationships for the right-hand marker M2 for the convergence in the horizontal direction. In Figure 7, the marker M2 is located on the right of the sensor S. This is detected by virtue of the fact that the sensor S outputs the signal "0", that is to say "no light". The circuit therefore has the information that the marker M2 must be moved to the left in order to find the sensor S, again until the left-hand edge e just touches or begins to touch the sensor S. In Figure 8, the marker M2 is located in the initial position too far to the left of sensor S. This is detected by virtue of the fact that the sensor S now indicates the signal "1" = "light" at the start of the correction. The circuit then detects that for the purpose of adjusting the correct position e the marker M2 must be moved to the right relative to the sensor S.

Two different manipulated variables are then produced from the adjustments of the left-hand marker M1 onto the sensor S in accordance with Figures 5, 6 and the adjustments of the right-hand marker M2 onto the sensor S in accordance with Figures 7, 8. The arithmetic mean value is formed from these two manipulated variables and used to adjust the horizontal convergence.

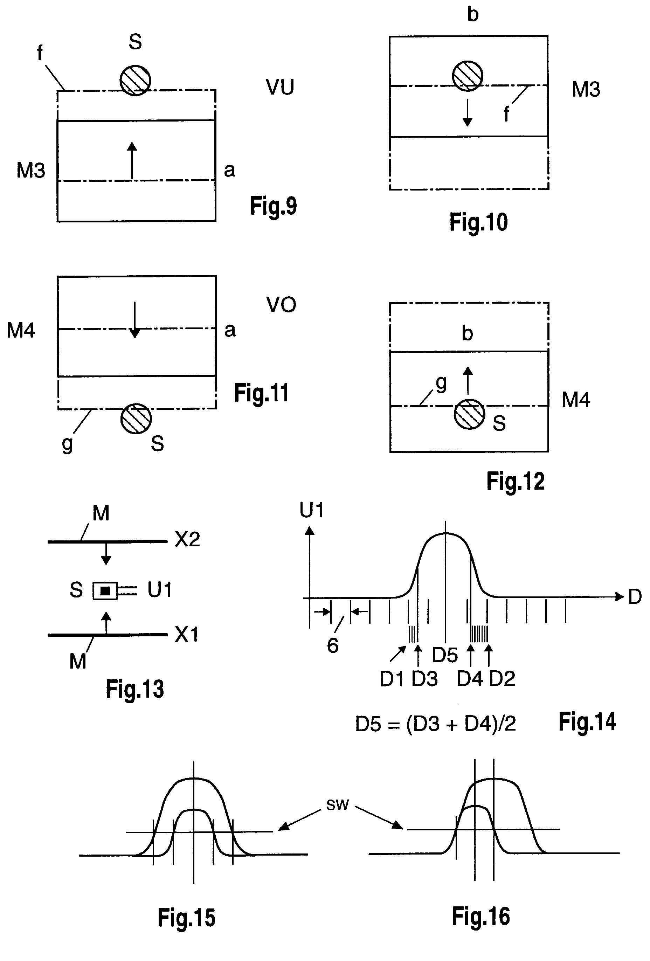

Figure 9 shows the same relationships for the vertical convergence. In Figure 9, the lower marker M3 is located below the sensor S. This is detected by virtue of the fact that the sensor S outputs the signal "0". The marker M3 must thus be moved upwards for the adjustment of the marker M3 as far as the correct position in accordance with the edge f.

In Figure 10, the lower marker M3 is located in the initial position above or too far above the sensor S. This is detected by the output signal "1" = "light". The marker M3 must then be moved downwards as far as into the desired position in accordance with the edge f.

Figure 11 shows the marker M4 assigned to the upper edge of the sensor S in the initial position a outside the sensor S. This is detected, again, by virtue of the fact that the output signal of the sensor S has the value "0" = "no light". The circuit then displaces the marker M4 downwards as far as into the desired position g.

In Figure 12, the upper marker M4 is located too far down relative to the sensor S, as detected by the output signal "1". It is therefore moved upwards by the circuit as far as into the desired position g relative to the sensor S. Thus, it is already possible also to detect for the markers M3 and M4, for the vertical convergence from the stationary output signal in the initial position of the correction, where the marker M is located relative to the sensor S, and in which directions it must be moved for the correct adjustment onto the sensor S.

In summary, it therefore holds for the detection of the initial position and the marker movement, resulting therefrom, for achieving the said alignment with the sensor for the vertical convergence that:

Lower marker M3:

 Sensor signal "0" = "dark": marker movement upwards
 Sensor signal "1" = "bright": marker movement downwards

Upper marker M4:

 Sensor signal "0" = "dark": marker movement downwards
 Sensor signal "1" = "bright": marker movement upwards.

Figures 13 and 14 show an exemplary embodiment for the said second embodiment. The marker M has only a small dimension in the direction of adjustment, comprising, for example, only a bright, red, green or blue line or a few bright lines of the respective primary colour to be adjusted inside an area which is black at least in the adjustment range. The marker M is firstly adjusted to its lowermost position of the adjustment range X1 by feeding the channel for the vertical convergence the lowest manipulated variable D inside the adjustment range. The manipulated variable D is then increased in accordance with Figure 14 in large steps 6 such that the marker M moves towards the sensor S until the marker M reaches the sensor S. This is detected by the output signal U1 of the sensor going over from "0" = "no light" to "1" = "light". The large steps 6 are dimensioned such that the marker M cannot jump over the sensor S without illuminating the sensor S. Within the adjustment values, formed by the large steps 6, for the manipulated variable D, the last value D1 before the detection of the illumination of the sensor S inside the grid of the large steps 6 is stored.

Thereafter, the marker M is displaced into its uppermost end position X2 by applying the highest convergence correction manipulated variable D. The manipulated variable D is then reduced in large steps 6, and the manipulated variable D2 is determined as in the case of D1. Subsequently, the manipulated variable is increased in small steps starting from D1 until in the case of the value D3 the output signal U1 becomes = "1", that is to say indicates "light". The manipulated variable D is likewise reduced in small steps starting from D2, specifically down to the value D4 at which the sensor S outputs the output signal U1 = "1".

This approach of the marker M to the sensor S from two directions thus produces two values D3 and D4 for the manipulated variable D, which are situated symmetrically relative to the optimum value for which the marker M would be located precisely in the middle of the sensor S. This value D5 is now determined by

$$D5 = (D3+D4)/2.$$

This method is also repeated for the two other primary colours and for the horizontal convergence and the vertical convergence.

Figures 15 and 16 illustrate once again the advantage achieved by the invention. In Figure 15, the symmetrical evaluation of the curve in accordance with Figure 14 in the case of the threshold value SW has the effect of achieving the adjustment of the marker, indicated by the two curves, precisely to the middle of the sensor. Figure 16 holds for the case in which a marker is moved towards the sensor only from the left-hand side, and detects the impingement on the sensor only on this side in the case of the threshold value SW. An asymmetrical position is then reached, as the two curves in Figure 16 show. That is to say, the marker is then not adjusted to the middle of the sensor.

**Claims**

1. Method for adjusting the convergence in a projection television receiver, in which a marker (M) contained in the picture is adjusted by a manipulated variable (D) onto a photosensor (S) arranged on the projection screen (1), characterized in that two markers (M1, M2) are moved towards the sensor (S) from opposite directions with a varying step size until the sensor (S) supplies an output voltage (U1) indicating light for the two markers (M1, M2) in conjunction with two mutually spaced manipulated variables (D2, D4), and in that a mean value (D5) of the two manipulated variables (D3, D4) is used as manipulated variable for the marker (M).

2. Method according to Claim 1, characterized in that the area of the marker (M) is large by comparison with the area of the sensor (S).

3. Method according to Claim 1, characterized in that the monochrome marker (M) is formed by a rectangular or square bright area of the primary colour to be balanced, comprising a multiplicity of successive lines with the whole line duration or a part thereof.

4.  Method according to Claim 1, characterized in that in the direction of the adjustment relative to the sensor (S), the dimension of the marker (M) is equal to or greater than the adjustment range (A) for the marker (M).

5.  Method according to Claim 4, characterized in that the dimensions (d), the adjustment range (A) and the position of the marker (M) relative to the sensor (S) are matched to one another such that in its end setting in the adjusting direction towards the sensor (S), the marker (M) does not leave the sensor (S), and in its end setting in the adjusting direction away from the sensor (S) it leaves the sensor (S).

6.  Method according to Claim 4, characterized in that the area of the marker (M) is equal to the area which is enclosed by grid lines of a grid pattern which is represented on the picture screen and defines convergence intersection points.

7.  Method according to Claim 1, characterized by the following steps:

    a) the manipulated variable (D) is changed in large steps (6) such that the marker (M) is moved from the first side towards the sensor (S) until, in conjunction with a first value of the manipulated variable, the sensor (S) supplies a signal (U1) triggered by the marker (M),
    b) the manipulated variable (D) is moved back by one step to the second value (D1), situated therebefore, inside the pattern of the large step (6),
    c) the manipulated variable (D) is changed again in the direction towards the sensor (S) in smaller steps, until the sensor (S) again supplies a signal (U1) in conjunction with a third value (D3) of the manipulated variable (D),
    d) the steps a) to c) are carried out likewise by moving the marker (M) from the other side towards the sensor (S), a fourth value (D4) thereby being produced, and
    e) a mean value (D5) between the third value (D3) and the fourth value (D4) is used as manipulated variable for the convergence.

8.  Method according to Claim 7, characterized in that the step width (6) of the large steps is approximately 5 to 10 times the step width of the small steps.

9.  Method according to Claim 7, characterized in that the marker (M) is formed by a monochrome bright line in a background which is dark in the adjustment range. 10. Method according to Claim 7, characterized in that the large steps (6) have a step width such that the marker (M) cannot jump over the entire sensor (S) with one step.

**Fig.1**

**Fig.2**

## Fig.3

M1    M2

c    S

d

H

## Fig.4

M4

X2

V    S    c

X1

M3

U1

D

D3

D1    D2

## Fig.5

A

a    c    b

M1    S    LH

d

## Fig.6

c    a

M1

S

## Fig.7

M2

e    a

S    RH    S

## Fig.8

M2

e    a

S

Fig.9

Fig.10

Fig.11

Fig.12

Fig.13

Fig.14

$$D5 = (D3 + D4)/2$$

Fig.15

Fig.16